# EUROPEAN PATENT APPLICATION

(11) **EP 1 195 973 A1**
(43) Date of publication of application: **10.04.2002**
(21) Application number: 00121786.8
(22) Date of filing: 05.10.2000
(51) Int. Cl.: H04M 3/42

(54) **Method for registering a user into new services by sending a permanent PIN via SMS or e-mail**

(71) Applicant: Digital Rum Ltd., London NW6 4BT (GB)
(72) Inventor: Kalafatis, Ioannis, London W11 2DY (GB)
(74) Representative: Preuss, Udo, Dipl.-Ing.

(57) **Abstract**

The present invention refers to an automated message method in a registration process for a new user of services, the registration procedure being carried out by telephone between the user and a service man. Furthermore, the invention refers to a computer system for carrying out said method and a computer program product. The inventive method comprises the steps of:
a) sending automatically by a computer system a SMS-message and/or an E-mail to the new user including at least an automatically generated temporary PIN;
b) inputting said temporary PIN into the computer system by the service man after the temporary PIN has been received by the user and phoned to the service man;
c) checking if the temporary PIN input by the service man match the temporary PIN sent to the user in step a); and
d) generating and sending automatically a further SMS-message and/or an E-mail including a permanent PIN to the user.

## Description

### Technical Background

The present invention refers to an automated message method in a registration process for a new user of services, the registration process being carried out by telephone between the user and a service man. Services within the meaning of the present invention are services for which a user needs an identification comprising a so-called UserID (user identification) and a

PIN (personal identification number). The PIN has to be kept secret by the user, since otherwise an unauthorized person who knows the UserID could use the services in the name UP:aw of the registered user. Services in which a UserID and a PIN are necessary for a user are especially services offering the possibility to buy products by telephone, e-mail, or other wireless applications, like mobile phones and mobile organizers connectable to the global computer network (internet). In all these cases, an order will be carried out only if the User ID and the PIN match with the data stored in a computer system of the service provider receiving the order. Therefore, the PIN and optionally also the UserID have to be passed on very carefully. The registration process for a new user of services already offered by, for example, so-called call centres, might be a weak point with respect to the confidentiality above-mentioned data.

### Relevant State of the Art

At present, a process for registration of a new user of services is done in the following way: a service man at, for example, a call centre asks the user for personal details, such as name, age, gender, phone numbers at home and at work, mobile phone number, e-mail address, preferred contact method and delivery address. At least the full name, the phone number or the mobile phone number as well as the delivery address are compulsory. The preferred contact method refers to how the user wishes to be contacted. The following three options exist: 1. SMS, 2. e-mail or 3. SMS+e-mail.

Normally, after inputting all the personal data of the new user, a UserID and a permanent PIN are generated and sent to the user, for example by post, e-mail or with a SMS message. However, there is no security in the case that where the user calling for registration may try to register as a customer of the services, but gives fictitious or wrong personal details. Furthermore, the potential user may not wish to give a certain piece of information (for example payment details like credit card number) immediately. In such a case, the present registration procedures have the problem of lack of security.

### Summary of the Invention

It is an object of the invention to provide an automated message method in a registration process for a new user of services, the registration process being carried out by telephone between the user and a service man, which registration procedure is more secure than methods used hitherto.

This object is solved by an automated message method comprising the features of present claim 1. Such an automated message method comprises the steps of:
a) sending automatically by a computer system a SMS-message and/or an e-mail to the new user including at least an automatically generated temporary PIN (optionally also a user identification);
b) inputting said temporary PIN (and optionally also said user identification) into the computer system by the service man after said temporary PIN (and optionally also said user identification) being received by the user and phoned to the service man;
c) checking at least if said temporary PIN (and optionally also said user identification) input by the service man match said temporary PIN (optionally also said user identification) originally sent to the user in step a); and
d) generating and sending automatically a further SMS-message and/or an E-mail including a permanent PIN to the user.

Due to the new text message, a SMS-message and/or an e-mail to the new user which includes at least an automatically generated temporary PIN (in a preferred embodiment also a UserID), the whole registration process is safer than the previous process according to the prior art. Now, the user who has received the temporary PIN (in a preferred embodiment also the UserID) has to repeat at least the temporary pin to the service man on the phone. The service man inputs said temporary PIN (optionally in addition the user identification) into the computer system. Only if at least the temporary PIN input by the service man match said temporary PIN sent to the user, will a permanent PIN be generated and sent to the user. Hence, the security with respect to the fact that the permanent PIN is sent to the correct addressee (the user) is increased. In addition, it might not be necessary for a user to name his credit card number to a service man in a call centre; he can wait for the message with the permanent PIN (and optionally in addition the User ID) before inputting the credit card number.

It is to be noted that the above-mentioned steps of said automated message method do not necessarily have to be carried out in a single phone call. It might be possible to send a message according to step a) after registering the essential personal data of a potential user and the potential user can phone the service man again after the user has received the user identification and the temporary PIN. The service man can then input these data into the computer system and, if the user identification and temporary PIN input by the service man match the user identification and the temporary PIN sent to the user, a further SMS-message and/or an e-mail including a permanent PIN to the user is generated and sent. Hence, a person skilled in the art will be aware of the fact that the steps a) to d) do not have to be carried out immediately one after the other, but can be carried out over a variable time period. This time period can be minutes, hours or even days.

A preferred embodiment of the inventive method includes the feature that said further SMS-message and/or e-mail including a permanent PIN does not include said user identification. By separating the user identification and the permanent PIN an unauthorized person cannot receive all data necessary to order products.

A further preferred embodiment of the inventive method is characterized by the feature that the steps a) to c) are only repeated a predetermined number, for example three times, to avoid an undesirably large number of messages being sent to the user. The maximum number of messages, including the temporary PIN, may be three per hour.

A further object of the invention is to provide a computer system for carrying out an inventive method. This object is solved by a computer system according to claim 6. Such a computer system comprises means for generating and sending a SMS-message or an e-mail to the new user, including at least an automatically generated UserID and a temporary PIN, means for checking if the UserID and temporary PIN data phoned in by the user and input by the service man into the computer system match the user identification and the temporary PIN originally sent to the user. In addition, means are provided for generating and sending a further SMS-message and/or an e-mail, including a permanent PIN to the user, if the UserID and the temporary PIN input by the service man into the computer system match the UserID and the temporary PIN sent to the user.

A preferred embodiment of the computer system according to the invention comprises a display device on which the service man is displayed a mask for inputting user-related data, particularly the UserID and the PIN.

The invention also comprises a computer program product directly loadable into the internal memory of a digital computer, comprising software code portions for performing the steps of one of the claims 1 to 5 when said program is running on a computer.

Finally, the invention comprises a computer program product stored on a computer usable medium for an automated message method in a registration procedure for a new user of services, comprising computer-readable program means for causing a computer to generate a UserID and a temporary PIN, computer readable program means for causing a computer to generate and send a SMS-message and/or an e-mail to the new user, including the generated user identification and temporary PIN, computer readable program means for causing a computer to check if said user identification and temporary PIN input by a service man match said user identification and temporary PIN sent to the user, and computer readable program means for causing a computer to generate a permanent PIN, and computer readable program means for causing a computer to generate and send to the user a further SMS-message and/or an e-mail including said permanent PIN.

It is also desirable that said computer program product comprises computer readable program means for causing a computer to generate an input mask on a display for input of said user identification and temporary PIN.

### Short Description of the Drawings

An embodiment of the invention is explained in detail below with reference to the accompanying drawings, wherein:
- Fig. 1: shows a schematic flow diagram of a registration process;
- Fig. 2: shows an input mask for a service man at a call centre for inputting personal details of a potential user of a service; and
- Fig. 3: shows a further input mask for inputting a UserID and a temporary PIN.

### Description of an Embodiment of the Invention

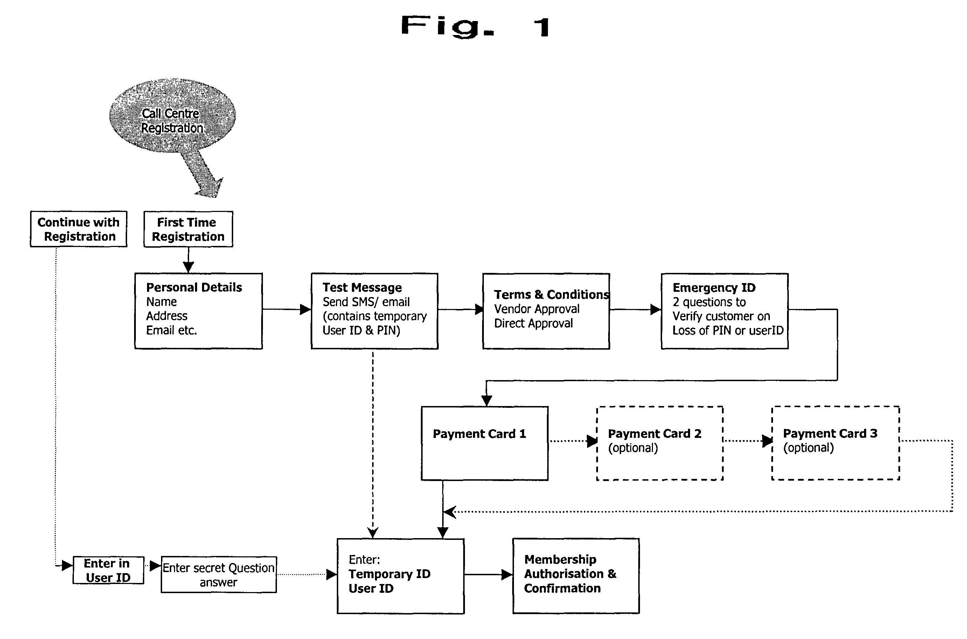

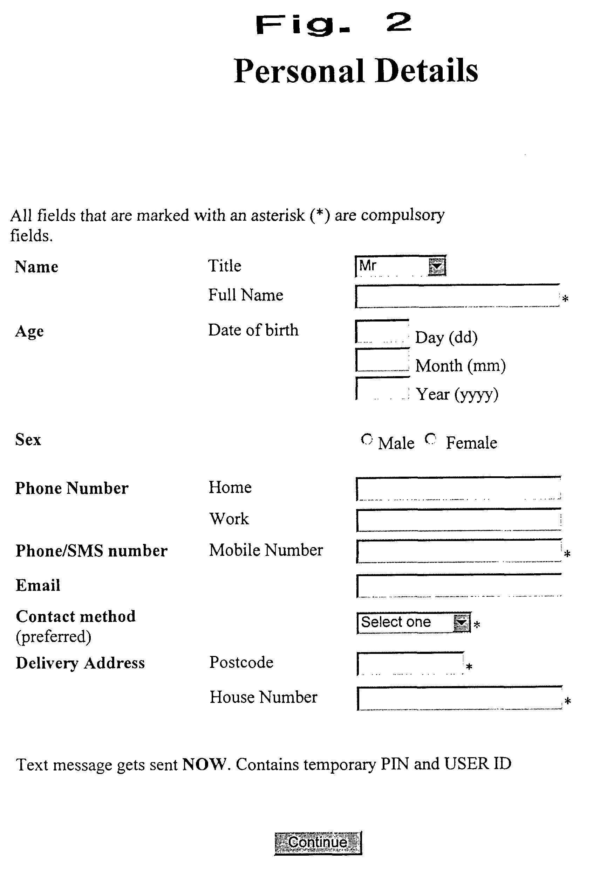

As can be gathered from Figs. 1 to 3, an inventive method starts with a phone call from a potential user of a service. In this case, a call handler (service man) at a call centre has on his computer display an input mask for inputting personal details of the potential new user of the services. The user or customer is asked for his name and date of birth, gender, phone number at home and at work, his mobile number, e-mail address, his preferred contact method and the postal code and house number. A delivery address is automatically generated from the postal code and the house number.

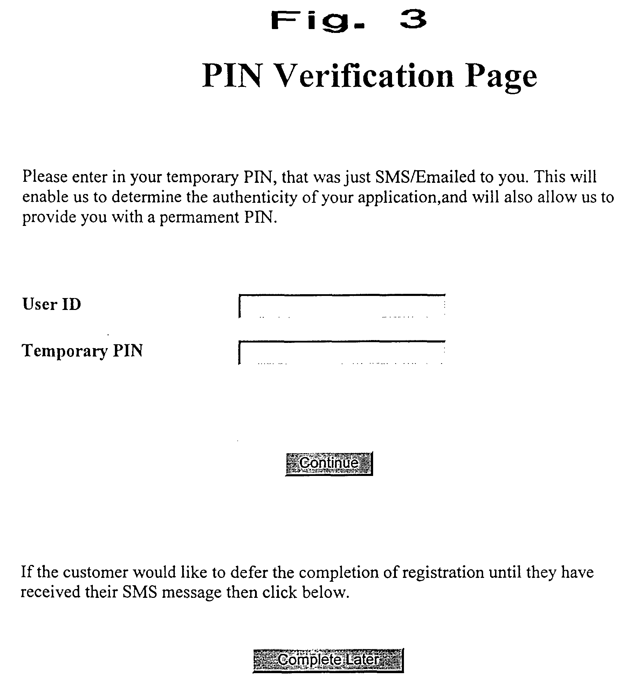

On the mask all the field marks with an asterisk (*) are compulsory fields. If at least the compulsory fields are filled, the call handler clicks the button "continue". In this case, a so-called test message (contains a UserID and a temporary PIN) is sent to the potential user. To generate and send the test message by e.g. SMS the full name, the mobile number and the contact method have to be known by the system. The potential user now has to repeat by the phone the UserID and the temporary PIN to the service man at the call centre. The service man enters the temporary PIN and the user ID into the input mask as shown in Fig. 3. Again, the service man has to click the button "continue". In this case, the computer system compares the input UserID and the temporary PIN with the UserID and the temporary PIN sent to the user with the test message. If the input temporary PIN and the UserID match the data stored in the user database (or customer database), a further SMS-message and/or an e-mail is sent to the user, including a permanent PIN. It might be possible to send this second message also by normal mail, but an e-mail or a SMS-message are preferred.

In the case that the user ID and the temporary PIN phoned in by the user to the service man do not match with the data stored in the corresponding user database of the computer system, the registration process described above may be repeated or the service man may input the UserID and the temporary PIN again into the corresponding input mask. However, these steps may only be repeated three times in order to avoid "bombarding" the user with an undesirable number of test messages.

As also shown in Fig. 1, the registration process can be continued after receipt of the test message by the user. In this case, a time period of a few minutes or a few hours or days may elapse between the steps of sending the test message and the first-time registration and the entering in the temporary PIN and the user ID by the service man to continue the registration process up to the automatically generated and sent message, including the permanent PIN.

## Claims

1. An automated message method in a registration process for a new user of services, the registration process being carried out by telephone between the user and a service man, the method comprises the steps of:
a) sending automatically by a computer system a SMS-message and/or an e-mail to the new user including at least an automatically generated temporary PIN;
b) inputting said temporary PIN into the computer system by the service man after said temporary PIN has been received by the user and phoned to the service man;
c) checking in said computer system if said temporary PIN input by the service man match said temporary PIN sent to the user in step a); and
d) generating and sending automatically a further SMS-message and/or an E-mail including a permanent PIN to the user.

2. A method according to claim 1, wherein said further SMS-message and/or E-mail including a permanent PIN does not include an user identification.

3. A method according to claim 1, wherein in said step a) at least an automatically generated user identification and said temporary PIN is included in said SMS-message and/or said e-mail; both, said user identification and said temporary PIN are input into the computer system by the service man after these data are phoned to the service man.

4. A method according to claim 3, wherein in step c) said automatically generated user identification and said temporary input by the service man are checked.

5. A method according to one of the preceding claims, wherein, if said step c) fails, said steps a) to c) are only repeated a predetermined number of times.

6. A computer system for carrying out an automated message method in a registration process for a new user of services, the registration process being carried out by telephone between the user and a service man, comprising:
- means for generating and sending a SMS-message and/or an E-mail to the new user including at least a temporary PIN and optionally an automatically generated user identification;
- means for checking if said temporary PIN and optionally said user identification input by the service man into the computer system after phoning these data by the user match said user identification and said temporary PIN sent to the user; and
- means for generating and sending a further SMS-message and/or an E-mail including a permanent PIN to the user, if at least said temporary PIN input by the service man into the computer system match the temporary PIN sent to the user.

7. A computer system according to claim 6, wherein a display device is provided on which said service man is displayed a mask for inputting user-related data.

8. A computer system according to claim 6, wherein a display device is provided on which said service man is displayed a mask for inputting said user identification and temporary PIN.

9. A computer program product directly loadable into the internal memory of a digital computer, comprising software code portions for performing the steps of one of the claims 1 to 5 when said program is running on a computer.

10. A computer program product stored on a computer usable medium for an automated message method in a registration process for a new user of services, comprising
- computer readable program means for causing a computer to generate a temporary PIN and optionally a user identification;
- computer readable program means for causing a computer to generate and send a SMS-message and/or an E-mail to the new user including said generated temporary PIN and optionally in addition said user identification;
- computer readable program means for causing a computer to check if at least said temporary PIN input by a service man match said temporary PIN sent to the user; and
- computer readable program means for causing a computer to generate a permanent PIN; and
- computer readable program means for causing a computer to generate and send to the user a further SMS-message and/or an E-mail including said permanent PIN.

11. A computer program product according to claim 10, wherein a computer readable program means is provided for causing a computer to generate an input mask on a display for input of said user identification and temporary PIN.
